# EUROPEAN PATENT APPLICATION

(11) **EP 4 760 949 A1**
(43) Date of publication of application: **17.06.2026**
(21) Application number: 25797768.6
(22) Date of filing: 31.03.2025
(51) Int. Cl.: H01M 50/383, H01M 50/289, H01M 50/271, H01M 50/342

(54) **BATTERY MODULE, AND BATTERY PACK AND VEHICLE INCLUDING SAME**

(30) Priority: 03.05.2024 KR 20240059300
(71) Applicant: LG Energy Solution, Ltd., Seoul 07335 (KR)
(72) Inventor: PARK, Ju-Hun, Daejeon 34122 (KR)
(74) Representative: Plasseraud IP
(86) International application number: PCT/KR2025/004162
(87) International publication number: WO 2025/230143

(57) **Abstract**

The present disclosure relates to a battery module including: a plurality of battery cells; a module case configured to store the plurality of battery cells and having a first venting hole formed on one side thereof to discharge venting gas generated from the battery cell to an outside; and a compression member configured to block fluid movement between at least two battery cells between the plurality of battery cells and one side of the module case.

## Description

### TECHNICAL FIELD

The present disclosure relates to a battery module, a battery pack and vehicle including the same. Specifically, the present disclosure relates to a battery module capable of suppressing thermal propagation inside the battery module, and a battery pack and vehicle including the same.

This application is based on and claims priority from Korean Patent Application No. 10-2024-0059300, filed on May 03, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. When high output voltage is required, multiple battery cells may be connected in series to form a battery module or battery pack. In addition, to increase charge/discharge capacity, multiple battery cells may be connected in parallel to configure a battery module or battery pack. Accordingly, the number of battery cells included in the battery module or pack may be variously configured depending on the required output voltage or charge/discharge capacity.

Meanwhile, since a battery cell involves a chemical reaction during charging and discharging, its performance may deteriorate when used in environments exceeding the appropriate temperature. Moreover, if thermal control is not properly maintained at the appropriate temperature, there remains a potential risk of unexpected ignition or explosion. In addition, a battery module is configured in a structure in which such battery cells are densely stored inside a module housing. Therefore, if a thermal event occurs in any one of the battery cells, the high-temperature gas and flame discharged therefrom may propagate to adjacent battery cells, leading to a chain reaction of battery cell explosions, which poses a significant safety risk.

In particular, in conventional battery modules, high-temperature gas or flames are vented toward the top of the battery cell and move to adjacent battery cells through the empty space formed between the battery cells and the top plate. Accordingly, there is a problem that thermal propagation inside the battery module is further accelerated.

Therefore, there is a need to develop a structure capable of suppressing and delaying thermal propagation in order to prevent, even if a thermal event occurs in some battery cells inside a battery module, high-temperature gas or flames from spreading to other battery cells inside the battery module and causing thermal runaway.

### DISCLOSURE

### Technical Problem

The present disclosure is designed to solve the problems of the related art, and therefore the present disclosure is directed to providing a battery module capable of effectively preventing or delaying thermal runaway propagation between battery cells by blocking the path of high-temperature gas or flames to adjacent battery cells.

The present disclosure is also to provide a battery pack and vehicle that include such a battery module.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including: a plurality of battery cells; a module case configured to store the plurality of battery cells and having a first venting hole formed on one side thereof to discharge venting gas generated from the battery cell to an outside; and a compression member configured to block fluid movement between at least two battery cells between the plurality of battery cells and one side of the module case.

The compression member may be configured to fill a space between the battery cells and the module case.

The compression member may be configured in a sheet shape.

The compression member may be configured to be in close contact with an upper end of the battery cell.

The compression member may be configured to be partially inserted into the first venting hole.

The compression member may have a second venting hole formed at a position corresponding to the first venting hole.

The compression member may include a coupling portion protruding outward from an outer edge of the second venting hole and configured to be inserted into the first venting hole.

The battery module may further include a blocking member provided between the battery cells and configured to partition the plurality of battery cells, and the compression member may be configured such that an end of the blocking member is in contact therewith.

The compression member may be configured such that an end of the blocking member is inserted thereinto.

The battery module may further include a cover member configured to cover one side of the module case from the outside.

The cover member may have a notched portion provided at a position corresponding to the first venting hole.

In another aspect of the present disclosure, there is provided a battery pack including a battery module according to the present disclosure.

In one aspect of the present disclosure, there is provided a vehicle including a battery module according to the present disclosure.

### Advantageous Effects

According to one aspect of the present disclosure, it is possible to block the movement of fluids such as flames, particles, and high-temperature gases between the battery cells by a compression member provided in the empty space between the battery cells and the module case.

That is, according to the above aspect of the present disclosure, even if a thermal event occurs in some battery cells inside the battery module, the gas or flame can be effectively prevented or delayed from spreading to other battery cells in the battery module and causing thermal runaway. Therefore, the safety and reliability of the battery module can be ensured.

In addition, according to another aspect of the present disclosure, since high-temperature gases or flames generated in the battery cells inside the battery module can be smoothly discharged to the outside of the battery module, it is possible to prevent or delay the internal pressure of the battery module from increasing to cause the propagation of thermal runaway.

In addition, according to another aspect of the present disclosure, since the compression member is configured to be coupled to the venting hole of the module case, the compression member can be prevented from being deformed or damaged even when thermal runaway occurs in the battery module. Therefore, the structural stability of the battery module can be secured.

In addition, according to another aspect of the present disclosure, it is possible to prevent or delay events resulting from thermal runaway of the battery pack including multiple battery modules or a device equipped with them, such as a fire or explosion.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an overall perspective view of a battery module according to an embodiment of the present disclosure.
FIG. 2 is an exploded perspective view of a battery module according to an embodiment of the present disclosure.
FIG. 3 is a perspective view of a battery cell included in a battery module according to an embodiment of the present disclosure.
FIG. 4 is a cross-sectional view of a battery module according to an embodiment of the present disclosure, which may be a cross-sectional view, for example, taken along line I - I' in FIG. 1.
FIG. 5 is an enlarged view of part A in FIG. 4, which illustrates the structure of a compression member included in a battery module, according to an embodiment of the present disclosure.
FIG. 6 is a bottom perspective view of a compression member included in a battery module according to an embodiment of the present disclosure.
FIG. 7 is a top perspective view of a compression member included in a battery module according to an embodiment of the present disclosure.
FIG. 8 is an enlarged perspective view of a battery module according to an embodiment of the present disclosure.
FIG. 9 is a cross-sectional view of a battery module according to an embodiment of the present disclosure, which may be a cross-sectional view, for example, taken along line II - II' in FIG. 1.
FIG. 10 is a cross-sectional view illustrating some components of a battery module that are exploded according to an embodiment of the present disclosure.
FIG. 11 is a drawing illustrating a cover member included in a battery module according to another embodiment of the present disclosure.
FIG. 12 is a cross-sectional view of a battery module according to another embodiment of the present disclosure.
FIG. 13 is a drawing illustrating a cover member being opened when a thermal event occurs in a battery module according to another embodiment of the present disclosure.
FIG. 14 is a schematic perspective view of a battery pack including a battery module according to an embodiment of the present disclosure.
FIG. 15 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction), i.e., a height direction of the battery cell, perpendicular to both the X-axis direction and the Y-axis direction.

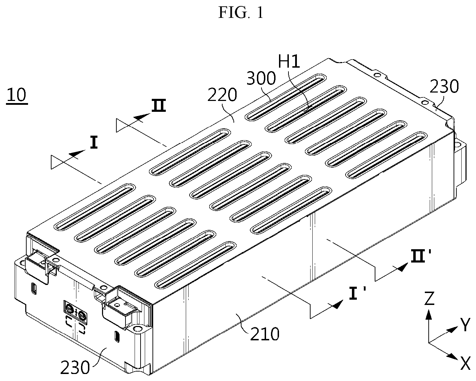

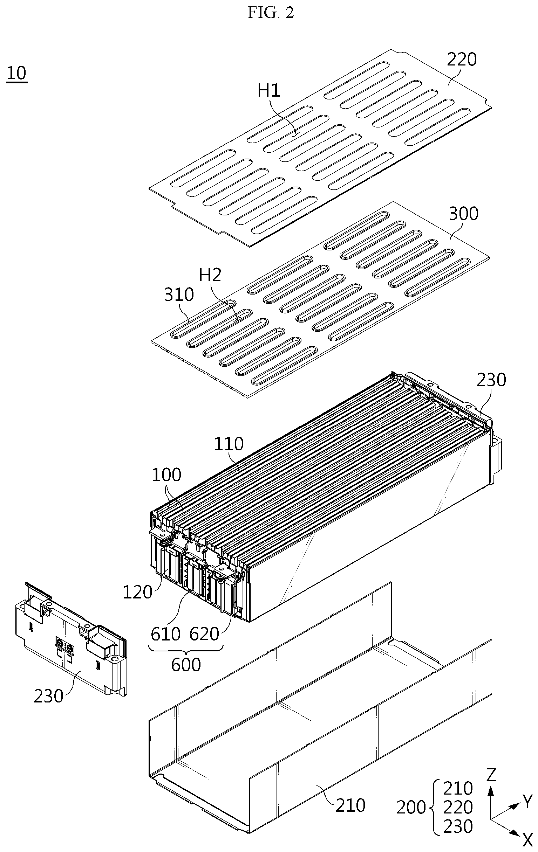

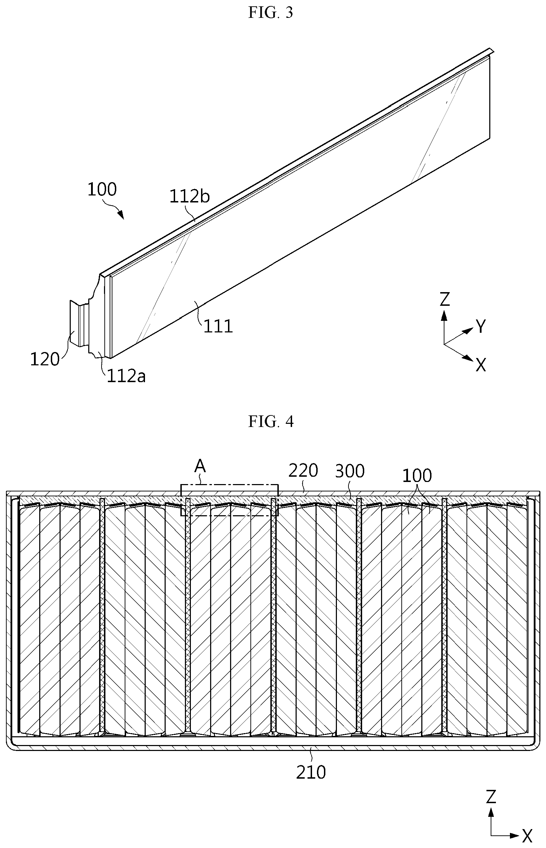

FIG. 1 is an overall perspective view of a battery module according to an embodiment of the present disclosure, and FIG. 2 is an exploded perspective view of a battery module according to an embodiment of the present disclosure. FIG. 3 is a perspective view of a battery cell included in a battery module according to an embodiment of the present disclosure. In addition, FIG. 4 is a cross-sectional view of a battery module according to an embodiment of the present disclosure, which may be a cross-sectional view, for example, taken along line I - I' in FIG. 1.

Referring to FIGS. 1 to 4, a battery module 10 according to an embodiment of the present disclosure may include a battery cell 100, a module case 200, and a compression member 300.

A plurality of battery cells 100 may be provided. The plurality of battery cells 100 may be provided to be stacked in one direction. For example, as shown in FIG. 2, the plurality of battery cells 100 may be stacked along the left-right direction (X-axis direction).

As disclosed in the embodiment illustrated in FIG. 3, the battery cell 100 may be a pouch-type secondary battery. The battery cell 100 may include an electrode assembly and a cell case 110 that stores the electrode assembly. The cell case 110 may store the electrode assembly in a receiving portion 111, and the edges of the receiving portion 111 may be heat-fused to form sealing portions 112. The sealing portion 112 may be provided on three of the four edges of the battery cell 100.

In addition, each of the plurality of battery cells 100 may have an electrode lead 120. The electrode lead 120 may be connected to the electrode assembly, and may extend to the outside of the cell case 110, functioning as an electrode terminal.

A pair of electrode leads 120 may be provided, and the pair of electrode leads 120 may extend outward from both ends of the battery cell 100, for example, in the longitudinal direction (±Y-axis directions). In this case, the pair of electrode leads 110 may be a positive electrode lead and a negative electrode lead. The battery cell 100 may be configured such that two electrode leads 120 are located only at one end in the Y-axis direction, for example, at the end in the +Y-axis direction, as necessary.

The battery cell 100 may be provided to stand with the edge that does not include the sealing portion 112 facing downward. As illustrated in FIG. 2, the plurality of battery cells 100 may be disposed side by side in a left-right direction (X-axis direction) while standing in a vertical direction (Z-axis direction). In this case, each battery cell 100 may have the sealing portions 112 facing the front-back direction (Y-axis direction) and the upward direction (+Z-axis direction), and the receiving portion facing the left-right direction (X-axis direction).

In this case, referring to FIG. 3, the cell case 110 may have a cell terrace 112a on the side of the sealing portion 112 where the electrode lead 120 is provided. In addition, the cell case 110 may include a folding portion 112b provided to be bent from one side of the sealing portion 112 where the electrode lead 120 does not extend. That is, the cell case 110 may have a folding portion 112b on the side of the sealing portion 112 where the electrode lead 120 is not provided. This folding portion 112b may be provided on the top of the battery cell 100.

In the case where the battery cell 100 is disposed as described above, it is easy to control the venting direction to one side, and edge cooling may be performed through the edge that does not include the sealing portion, thereby securing cooling performance.

The present disclosure is not limited to a specific type or shape of the battery cell 100, and various battery cells 100 known at the time of filing the present disclosure may be applied. In the present embodiment, although a pouch-type secondary battery with high energy density and easy stacking will be described as shown in the drawing, it is obvious that a cylindrical or prismatic secondary battery may also be applied to the battery cell 100.

In addition, the battery cell 100 of the present disclosure may indicate one battery or a group of one or more batteries.

Referring to FIG. 2, the battery module 10 of the present disclosure may further include a bus-bar frame assembly 600. The bus-bar frame assembly 600 may be provided inside the module case 200 and configured to cover at least one side of the plurality of battery cells 100. In the present embodiment, as shown in FIG. 2, the bus-bar frame assembly 600 may be coupled to the front and rear sides of the plurality of battery cells 100.

The bus-bar frame assembly 600 may include a bus-bar frame 610 and a plurality of bus-bars 620. The bus-bar frame 610 may be disposed to be coupled substantially to the front and rear sides of the plurality of battery cells 100. The bus-bar frame 610 may have slits through which the electrode leads 120 of the battery cells 100 extend outward in the +Y-axis or -Y-axis direction. In addition, the bus-bar frame 610 may be formed of a material having electrical insulation, such as a plastic material, and configured such that the bus-bar 620 may be attached to the outer surface.

The plurality of bus-bars 620, as a means for connecting the battery cells 100 in series and/or in parallel, may be formed of a metal material, such as copper, aluminum, nickel, etc., and may be configured in the shape of bars. The electrode leads 120 of the battery cells 100 may pass through the slits of the bus-bar frame 610 and to extend outside the bus-bar frame 610, and the extending portions may be attached to the surface of the bus-bar 620 by welding or the like.

The module case 200 may be configured to store a plurality of battery cells 100. Specifically, the module case 200 may be configured to have an inner space formed and to store a plurality of battery cells 100 in the inner space.

A venting hole H1 may be formed in the module case 200. The first venting hole H1 may be configured to discharge venting gas generated in the battery cell 100 to the outside of the module case 200.

For example, as illustrated in FIG. 1, the first venting hole H1 may be formed on the upper surface of the module case 200. Accordingly, directional venting toward the top of the battery module 10 may be possible through the first venting hole H1.

Specifically, a plurality of first venting holes H1 may be provided at regular intervals in the horizontal direction (X-axis and Y-axis directions).

Meanwhile, considering the convenience of assembly or assembly tolerance, one side of the module case 200 and the battery cell 100 may be provided to be spaced a predetermined distance apart from each other. In this case, when a thermal event occurs in any one battery cell 100, venting gas or flame is likely to spread to another adjacent battery cell 100 through a certain gap formed between the battery cell 100 and the module case 200.

Therefore, the battery module 10 according to an embodiment of the present disclosure may include a compression member 300. The compression member 300 may be provided inside the module case 200. More specifically, referring to FIG. 4, the compression member 300 may be provided between a plurality of battery cells 100 and one side of the module case 200. The one side of the module case 200 may indicate a side where the first venting hole H1 is formed.

As described above, the battery cells 100 may be stacked along the horizontal direction while standing in the vertical direction, and the compression member 300 may be provided on one side of the battery cells 100 so as to extend along the horizontal direction (the stacking direction of the battery cells 100). Accordingly, the compression member 300 may be configured to block the movement of fluid between at least two battery cells 100 in the space between the plurality of battery cells 100 and one side of the module case 200. The fluid may indicate venting gas, flame, and/or particles.

In addition, at least two battery cells 100 may be partitioned and separated from each other by the compression member 300. That is, the compression member 300 may be configured to separate the space between at least two battery cells 100. In this case, as disclosed in the embodiment illustrated in FIG. 3, the compression member 300 may be configured to separate the spaces between all battery cells 100.

When a thermal event occurs in any one battery cell 100, venting gas or flame may move toward the space between the plurality of battery cells 100 and the module case 200, and the venting gas or flame is likely to move along the stacking direction of the battery cells 100 in the space between the plurality of battery cells 100 and the module case 200, spreading to other adjacent battery cells 100. However, according to the above-implemented configuration of the present disclosure, even if a thermal event occurs in any battery cell 100 of the battery module 10, the fluid such as venting gas, flame, and/or particles may be suppressed from moving to other battery cells 100 by the compression member 300.

Accordingly, when a thermal event occurs in a battery cell 100, propagation of the venting gas or flame to adjacent battery cells 100 may be prevented, thereby effectively preventing or delaying thermal runaway propagation between the battery cells 100. Therefore, the safety and reliability of the battery module 10 may be ensured.

The compression member 300 may be made of a compressible material. For example, the compression member 300 may be made of any one of silicone, aerogel, polyurethane, or the like. Accordingly, the compression member 300 may be configured to be provided between the module case 200 and the battery cells 100 while being in complete contact therewith. Therefore, the movement of the fluid to other battery cells 100 may be further blocked.

In addition, the compression member 300 may be made of a material having electrical insulation properties. As a result, electrical insulation between the battery cell 100 and the module case 200 may be secured. In addition, the compression member 300 may be made of a material having excellent heat resistance and/or fire resistance. As an example, the compression member 300 may be made of a mica material. As a result, it may be configured to maintain a hermetic structure without being deformed even at high temperature and high pressure.

The compression member 300 may include multiple materials rather than a single material. For example, a portion that comes into contact with the battery cell 100 or the module case 200 may be made of a compressible material, and the inner side thereof may be made of a material having excellent heat resistance and/or fire resistance.

According to the above-implemented configuration of the present disclosure, the gap between the compression member 300 and the battery cell 100 or the module case 200 may be minimized, while preventing deformation or damage by the high-temperature or high-pressure fluid.

Referring to FIG. 2, the module case 200 may be provided with a case body 210 and a top plate 220. The case body 210 may be configured to have at least an upper opening. For example, the case body 210 may be configured to have an upper opening, and front and rear openings. That is, the case body 210 may be configured as a U-frame.

The case body 210 may be made of a metal material having rigidity and heat resistance in order to physically or chemically protect the stored battery cells 100 therein.

The top plate 220 may be configured so as to form the upper side of the module case 200. The top plate 220 may be coupled to cover the upper opening of the case body 210. The top plate 220 may be coupled to the case body 210 by welding. In this case, the top plate 220 and the case body 210 may be coupled to each other into a square tube with front and rear openings.

The module case 200 may include an end plate 230 provided on the front and rear openings of the case body 210. The end plate 230 may be welded to the case body 210. Although not shown in the drawings for convenience, the end plate 230 may be configured such that, for example, an inner surface is made of an insulating material and an outer surface is made of a metal material. In addition, the end plate 230 may be partially provided with holes or slits for exposing components that are required to be exposed to the outside, such as a positive electrode terminal and negative electrode terminal or a connector of the battery module 10.

In addition, the module case 200 may be formed in various other shapes. For example, the module case 200 may include a box-shaped lower case having an upper opening, and an upper cover provided to cover the upper opening of the lower case.

In this case, as disclosed in the embodiment illustrated in FIG. 4, the first venting hole H1 may be formed on the top plate 220. In addition, the compression member 300 may be interposed between the battery cell 100 and the top plate 220. That is, the compression member 300 may be configured to fill the space between the upper side of the stacked battery cells 100 and the top plate 220.

High-temperature gases such as venting gas or flames generated from the battery cell 100 have a strong tendency to rise, and thus may head toward the empty space provided above the battery cells 100. In this case, according to the above-implemented configuration of the present disclosure, since a protrusion P is provided on the battery cells 100, heat such as venting gas or flames may be minimized from heading toward other battery cells 100.

In addition, since the compression member 300 is located inside the battery module 10, it does not increase the height of the battery module 10 and does not cause changes in the appearance of the battery module 10. Thus, according to the above-implemented configuration of the present disclosure, it is possible to prevent the energy density of the battery module 10 from being affected.

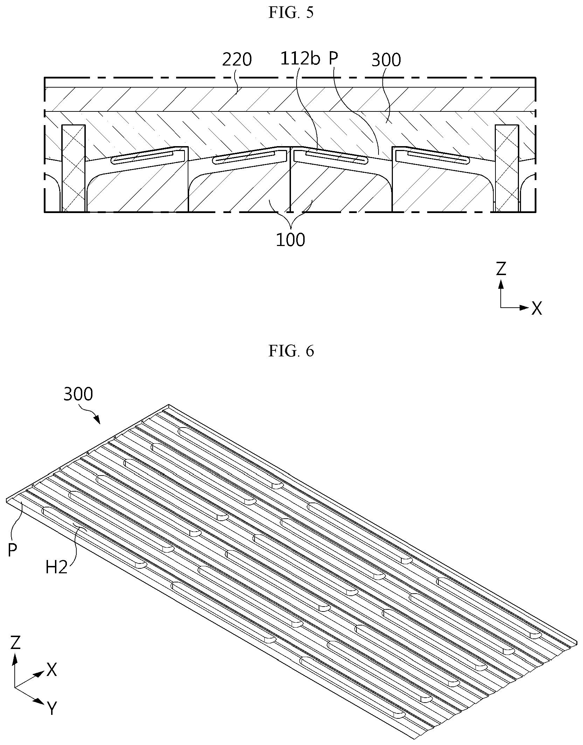

FIG. 5 is an enlarged view of part A in FIG. 4, which illustrates the structure of a compression member included in a battery module, according to an embodiment of the present disclosure. In addition, FIG. 6 is a bottom perspective view of a compression member included in a battery module according to an embodiment of the present disclosure.

The compression member 300 may be configured to fill the space between the battery cell 100 and the module case 200. The compression member 300 may be configured to extend along both the stacking direction of the battery cell 100 and the longitudinal direction. That is, the compression member 300 may be configured to cover one side of the battery cell 100 along the horizontal direction. As a result, the compression member 300 may be configured to separate two battery cells 100 from each other, among the plurality of battery cells 100.

In particular, as disclosed in the embodiment illustrated in FIG. 6, the compression member 300 may be configured in the form of a sheet. Therefore, the compression member 300 may be configured to face the battery cell 100 and the module case 200 in parallel. In addition, the compression member 300 may be configured such that all surfaces thereof come into close contact with the module case 200 and the battery cell 100.

According to the above-implemented configuration of the present disclosure, the sheet-shaped compression member 300 provided in the empty space between the battery cell 100 and the module case 200 may more reliably block the fluids such as flames, particles, and high-temperature gases from moving along the horizontal direction between the battery cells 100.

In addition, according to the above-implemented configuration of the present disclosure, the sheet-shaped compression member 300 may be applied to the entire space, instead of locally partitioning and dividing the space, between the battery cells 100 and the module case 200. Accordingly, even if a high-temperature or high-pressure fluid is generated due to thermal runaway of the battery cell 100, the compression member 300 may be minimized from being bulged, thereby suppressing the formation of an empty space at the top of the battery cell 100.

In addition, referring to FIG. 5, the compression member 300 may be made of a compressible material so as to be compressed in the vertical direction by one side of the module case 200 and the plurality of battery cells 100. As a result, the compression member 300 may be configured to be in close contact with the upper ends of the battery cells 100.

More specifically, the compression member 300 may be configured to be in contact with the sealing portion 112 located at the top of the battery cell 100. That is, the compression member 300 may be configured to be in contact with the folding portion 112b. The compression member 300 may be configured to pressurize the folding portion 112b inward. As a result, the compression member 300 may fix the folding portion 112b.

According to the above-implemented configuration of the present disclosure, as the compression member 300 is compressed and provided in the vertical direction, the compression member 300 may be in closer contact with the upper side of the battery cell 100. Accordingly, the empty space between the battery cell 100 and the module case 200 is further sealed, so that the movement of the fluid such as venting gas or flame beyond the compression member 300 to another battery cell 100 may be further prevented.

The compression member 300 may be provided in a concave and convex shape corresponding to the shape of the upper side of the battery cell 100. As a more specific example, the compression member 300 may have a protrusion P configured such that at least a portion thereof protrudes toward the battery cell 100. The protrusion P may be provided on the lower surface of the compression member 300. The protrusion P may be configured such that at least a portion thereof protrudes downward from the lower surface of the compression member 300.

Referring to FIG. 5, the protrusion P may be provided in a space between at least two battery cells 100. The protrusion P may be configured to block fluid movement between at least two battery cells 100. As disclosed in the embodiment illustrated in FIG. 5, the protrusion P may be provided in each space between two battery cells 100.

The protrusion P may be configured in a shape corresponding to the space between the battery cells 100. The protrusion P may be configured to be in contact with the battery cell 100. In particular, the protrusion P may be configured to be in close contact with the folding portion 112b of the battery cell 100.

Referring to FIG. 6, a plurality of protrusions P may be provided along one direction. The one direction may be defined as the direction in which the battery cells 100 are stacked, that is, as the left-right direction (parallel to the X-axis). In addition, the protrusion P may be configured to extend along the longitudinal direction (front-back direction) of the battery cell 100. The protrusion P may be provided to correspond to the length of the battery cell 100 in the front-back direction.

According to the above-implemented configuration of the present disclosure, both sides of each battery cell 100 may be blocked by the protrusion P, thereby preventing the movement of a fluid such as a venting gas toward other battery cells 100. In addition, according to the above-implemented configuration of the present disclosure, even if a high-temperature or high-pressure fluid is generated by the thermal runaway in the battery cell 100, the compression member 300 may be minimized from being bulged from the battery cell 100, thereby suppressing the formation of an empty space above the battery cell 100.

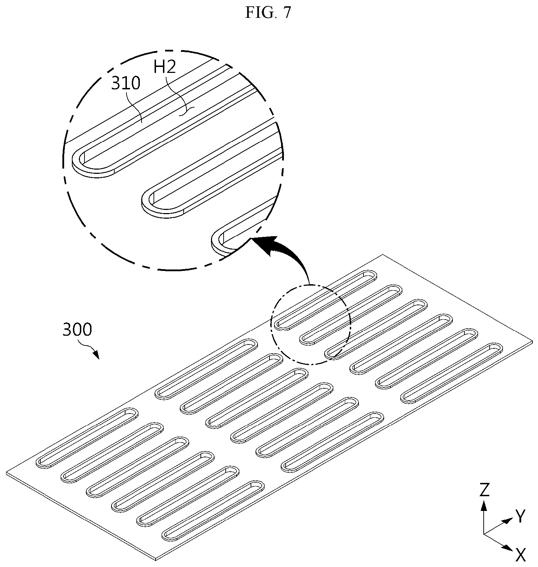

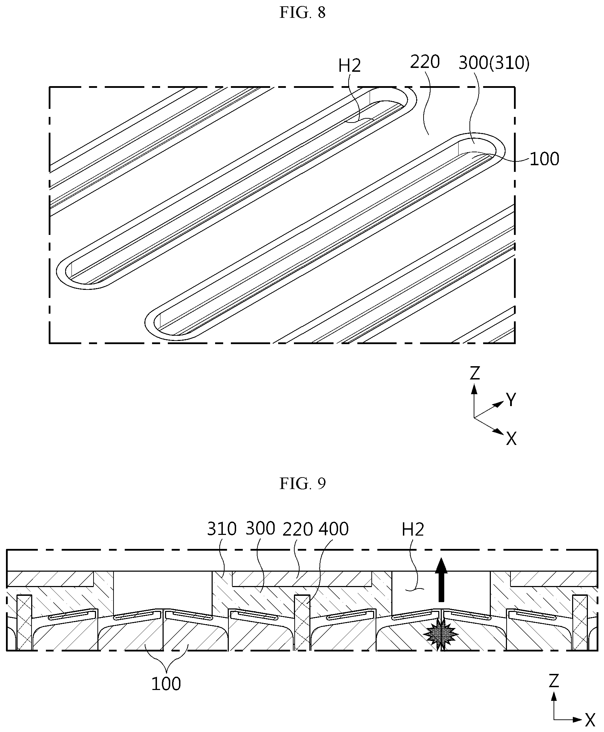

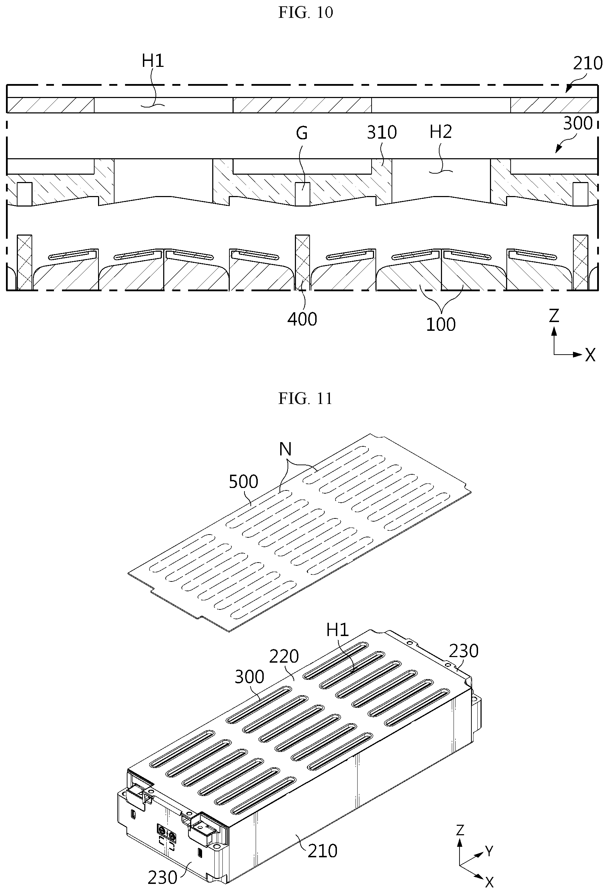

FIG. 7 is a top perspective view of a compression member included in a battery module according to an embodiment of the present disclosure, and FIG. 8 is an enlarged perspective view of a battery module according to an embodiment of the present disclosure. FIG. 9 is a cross-sectional view of a battery module according to an embodiment of the present disclosure, which may be a cross-sectional view, for example, taken along line II - II' in FIG. 1. In addition, FIG. 10 is a cross-sectional view illustrating some components of a battery module that are exploded according to an embodiment of the present disclosure.

Referring to FIG. 7, a second venting hole H2 may be formed on the compression member 300. The second venting hole H2 may be formed by perforating at least a portion of the compression member 300. The second venting hole H2 may be configured to discharge venting gas or the like generated in the battery cell 100 to the outside.

A plurality of second venting holes H2 may be provided at regular intervals in the horizontal direction (X-axis and Y-axis directions). In particular, the second venting hole H2 may be formed at a position corresponding to the first venting hole H1. In addition, the second venting hole H2 may be configured in a shape corresponding to the first venting hole H1.

According to the above-implemented configuration of the present disclosure, when a thermal event occurs in a specific battery cell 100, venting gas or the like may be discharged to the outside of the module case 200 through the second venting hole H2 and the first venting hole H1 provided on one side of the specific battery cell 100.

Referring to FIG. 8 and FIG. 9, the compression member 300 may be configured to be coupled to one side of the module case 200, for example, to the top plate 220. Specifically, when manufacturing the battery module 10, the compression member 300 may be coupled to the top plate 220, and then the top plate 220 may be coupled to the case body 210. In this case, the compression member 300 may be configured to be partially inserted into the first venting hole H1.

According to the above-implemented configuration of the present disclosure, the assembly position of the compression member 300 may be guided during the process of coupling the compression member 300 to the top plate 220, so that the assemblability may be improved. In addition, according to the above-implemented configuration of the present disclosure, the fixing force may be improved as the compression member 300 is coupled to the first venting hole H1 of the top plate 220. Accordingly, even when thermal runaway occurs inside the battery module 10, the compression member 300 may be prevented from being deformed or damaged, so that the structural stability of the battery module 10 may be secured.

As a more specific example, referring to FIG. 8 and FIG. 9, the compression member 300 may have a coupling portion 310. The coupling portion 310 may be configured to protrude outward from the edge of the second venting hole H2. That is, the second venting hole H2 may be provided between the coupling portions 310. The coupling portion 310 may be configured to be inserted into the first venting hole H1.

The coupling portion 310 may be formed along the inner perimeter of the first venting hole H1. The coupling portion 310 may be configured to be supported on the inner surface of the first venting hole H1. That is, the coupling portion 310 may be configured to protrude in the vertical direction (upward) from the main body of the compression member 300 and be disposed horizontally relative to the first venting hole H1 of the top plate 220.

According to the above-implemented configuration of the present disclosure, the surrounding area of the coupling portion 310 is all blocked, so that the venting gas or the like generated in the battery cell 100 may not move toward other battery cells 100 but may be guided and discharged only toward the first venting hole H1 and the second venting hole H2 (see the bold arrow in FIG. 9). That is, the directional venting of the gas may be more effectively guided upward by the coupling portion 310.

Therefore, according to the above-implemented configuration of the present disclosure, it is possible to shorten the time during which the high-temperature venting gas or flame stays inside the battery module 10 in the area of the battery cell 100 where the thermal event occurs. Therefore, it is possible to prevent or delay the internal pressure of the battery module 10 from increasing and causing thermal runaway propagation.

In addition, according to the above-implemented configuration of the present disclosure, the fixing force between the top plate 220 and the compression member 300 may be improved as the coupling portion 310 is inserted and fixed into the first venting hole H1. Accordingly, even when thermal runaway occurs inside the battery module 10, the compression member 300 may be prevented from being deformed or damaged, thereby securing the structural stability of the battery module 10.

Furthermore, the module case 200 (particularly, the top plate 220) may be made of a metal material with high thermal conductivity, such as aluminum, so that heat may be transferred through the module case 200 itself when a thermal event occurs. However, according to the above-implemented configuration of the present disclosure, since the coupling portion 310 of the compression member 300 covers the inner circumferential surface of the first venting hole H1, i.e., the top plate 220, the insulation performance of the module case 200 may be improved. As a result, thermal propagation through the module case 200 may be suppressed.

Referring to FIG. 10, the battery module 10 according to an embodiment of the present disclosure may further include a blocking member 400. The blocking member 400 may be provided in the inner space of the module case 200. The blocking member 400 may be provided between the battery cells 100. At least one blocking member 400 may be included in one battery module 10. A plurality of blocking members 400 may be provided along one direction in which the battery cells 100 are arranged. The blocking member 400 may be provided to be disposed for each battery cell 100 or more.

In particular, the blocking member 400 may be configured to partition the plurality of battery cells 100. The blocking member 400 may be configured to group the plurality of battery cells 100. For example, as shown in FIG. 10, the blocking member 400 may be disposed for each group of four battery cells 100, thereby splitting the battery cells 100 into groups of four.

The blocking member 400 may be provided as an insulating pad that is thinner than the battery cell 100. The blocking member 400 may be made of a material having excellent heat resistance and/or fire resistance. Alternatively, the blocking member 400 may be configured as a compressible pad made of, for example, a material such as silicone or aerogel.

According to the above-implemented configuration of the present disclosure, the battery cells 100 may be partitioned or separated to prevent gas or flames from spreading to other blocking members 400 adjacent to the blocking member 400. In addition, according to the above-implemented configuration of the present disclosure, the blocking member 400 may compress the battery cells 100 when the battery cells 100 swell, thereby contributing to the structural rigidity of the battery cells 100.

One side of the module case 200, i.e., the top plate 220, and the blocking member 400 may be provided to be spaced a predetermined distance apart from each other. Specifically, the blocking member 400 may be provided to extend further outward, for example, upward, than the battery cells 100. The blocking member 400 may be provided to extend further upward than the receiving portion of the battery cell 100. That is, the vertical height of the blocking member 400 may be configured greater than the vertical height of the battery cell 100.

According to the above-implemented configuration of the present disclosure, the blocking member 400 may more reliably partition and separate the battery cells 100, thereby reliably blocking the movement of venting gas or flames.

The blocking member 400 may be configured to face the protrusion P of the compression member 300. The compression member 300 may be configured such that the end of the blocking member 400 is in contact therewith. The compression member 300 may at least partially be in contact with the upper surface of the blocking member 400. The blocking member 400 may be configured to be in contact with the protrusion P.

The compression member 300 may be in surface contact with the blocking member 400. The compression member 300 and the blocking member 400 may be configured to be in surface contact along the longitudinal direction of the blocking member 400.

According to the above-implemented configuration of the present disclosure, since the gap between the compression member 300 and the blocking member 400 is minimized, the space through which the venting gas flows may be reduced, so that thermal runaway propagation to other adjacent battery cells 100 may be more reliably prevented.

In addition, according to the above-implemented configuration of the present disclosure, when the top plate 220 is coupled to the case body 210, the lower surface of the compression member 300 and the upper surface of the blocking member 400 may naturally come into close contact with each other. Furthermore, since the blocking member 400 has compressibility, it may be in closer contact with the compression member 300. As a result, the space between the blocking member 400 and the compression member 300 is further sealed, and the movement of venting gas or flame beyond the blocking member 400 may be further suppressed.

Furthermore, as disclosed in the embodiments illustrated in FIGS. 9 and 10, the compression member 300 may be configured such that the end of the blocking member 400 is inserted thereinto. More specifically, referring to FIG. 10, the compression member 300 may have a fixing groove G formed by at least a portion being recessed inward. The blocking member 400 may be configured to be inserted into the fixing groove G. The fixing groove G may be provided in the protrusion P of the compression member 300.

According to the above-implemented configuration of the present disclosure, the upper end of the blocking member 400 may come into close contact with the fixing groove G without a gap. Accordingly, since the blocking member 400 may be inserted into the compression member 300 and supported from both sides, the fixing force between the blocking member 400 and the compression member 300 may be improved. Therefore, the arrangement state of the battery cell 100 and the blocking member 400 may be stably maintained.

In addition, the sealing power between the end of the blocking member 400 and the compression member 300 may be stably secured. Therefore, according to the above-implemented configuration, the plurality of battery cells 100 may be more reliably partitioned and separated, thereby effectively preventing or delaying the thermal runaway propagation between the battery cells 100.

Furthermore, according to the above-implemented configuration of the present disclosure, it is possible to reduce the possibility that the high-temperature and high-pressure venting gas or flame pushes out the blocking member 400 or that the blocking member 400 is deformed to be bent by the internal pressure of the venting gas so that the heat is transferred to another battery cell 100.

In addition, according to the above-implemented configuration of the present disclosure, when the top plate 220 is coupled to the case body 310, the blocking member 400 may be naturally inserted into the fixing groove G of the compression member 300. Therefore, the assemblability may be improved when assembling the battery module 10.

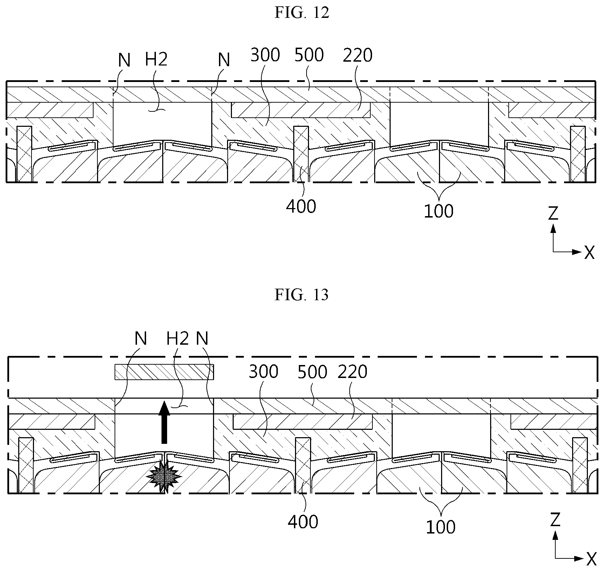

FIG. 11 is a drawing illustrating a cover member included in a battery module according to another embodiment of the present disclosure, and FIG. 12 is a cross-sectional view of a battery module according to another embodiment of the present disclosure. In addition, FIG. 13 is a drawing illustrating a cover member being opened when a thermal event occurs in a battery module according to another embodiment of the present disclosure.

Referring to FIGS. 11 to 13, the battery module 10 according to an embodiment of the present disclosure may further include a cover member 500.

Referring to FIGS. 11 and 12, the cover member 500 may be configured to at least partially cover the module case 200. For example, it may be configured to cover the top plate 220. The cover member 500 may be provided outside and/or inside the module case 200.

In particular, the cover member 500 may be configured to cover the first venting hole H1 and the second venting hole H2. In this case, the cover member 500 may be configured in a sheet shape and may be seated on the module case 200. The cover member 500 may be configured to cover a plurality of the first venting holes H1 and second venting holes H2 at once.

The cover member 500 may be configured to suppress venting gas or flames discharged when a thermal event occurs in the battery module 10 from spreading to another battery module 10. To this end, the cover member 500 may be made of a material having excellent heat resistance and/or fire resistance, such as a mica sheet or a silicone composite material.

As a result, the cover member 500 may maintain morphological stability without deformation even when high-temperature heat is generated, thereby stably blocking high-temperature gas or flame generated from the battery cell 100.

According to the above-implemented configuration of the present disclosure, since the cover member 500 is made of a hard and heat-resistant material, deformation due to high-temperature gas or flames may be minimized.

The cover member 500 may be configured to be at least partially opened and closed by venting gas or flames, as disclosed in the embodiment illustrated in FIG. 13. Specifically, at least a portion of the cover member 500 may be configured to be ruptured by the pressure or heat of the venting gas directed toward the first venting hole H1 and the second venting hole H2. Alternatively, at least a portion of the cover member 500 may be configured to be completely separated.

To this end, the cover member 500 may be provided with a notched portion N. The notched portion N may be configured to be opened by the venting gas, thereby discharging the venting gas to the outside of the battery module 10.

A plurality of notched portions N may be provided at regular intervals in the horizontal direction (X-axis and Y-axis directions). In particular, the notched portions N may be formed at positions corresponding to the first venting hole H1 and/or the second venting hole H2. In addition, the notched portion N may be configured in a shape corresponding to the first venting hole H1 and/or the second venting hole H2.

According to the above-implemented configuration of the present disclosure, when a thermal event occurs in a specific battery cell 100, the notched portion N provided on one side of the specific battery cell 100 may be ruptured to open at least one of the plurality of first venting holes H1 and second venting holes H2. Accordingly, venting gas or the like may be discharged to the outside of the module case 200 through the open first venting hole H1 and second venting hole H2 (see the bold arrow in FIG. 13).

In addition, the cover member 500 may prevent gas or flame discharged to the outside of the module case 200 from flowing back into the battery module 10. That is, the first venting hole H1 and second venting hole H2 provided on the side of the battery cell 100 where the thermal event does not occur may not be opened and may remain closed. As a result, the venting gas or flame discharged to the outside through the open first venting hole H1 and second venting hole H2 may be fundamentally blocked from flowing back into the battery module 10. In addition, the cover member 500 of the remaining portion that is not ruptured may block not only heat but also high-temperature gas, flame, or discharges generated from the battery cell 100.

That is, according to the above-implemented configuration of the present disclosure, when thermal runaway occurs in the battery module 10, not only may the venting gas or flame generated inside the battery module 10 be smoothly discharged to the outside of the battery module 10, but the discharged venting gas or flame may also be prevented from flowing back into the battery module 10. Therefore, the thermal runaway propagation may be effectively prevented or delayed by minimizing the thermal propagation to neighboring battery cells 100 or battery modules 10.

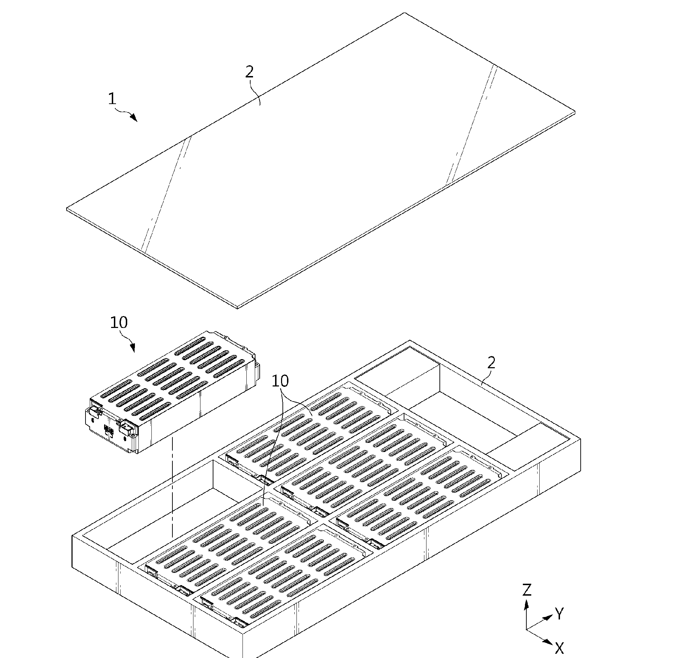

FIG. 14 is a schematic perspective view of a battery pack including a battery module according to an embodiment of the present disclosure.

Referring to FIG. 14, a battery pack 1 according to an embodiment of the present disclosure may include one or more battery modules 10 according to an embodiment of the present disclosure described above. The battery pack 1 according to the present disclosure may further include a pack case 2 for storing a BMS (Battery Management System), a current sensor, a fuse, and the like for integrated control of charging and discharging of one or more battery modules, and the components described above.

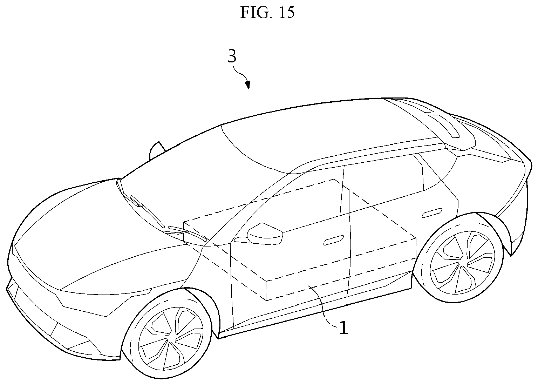

FIG. 15 is a schematic perspective view of a vehicle including a battery pack according to an embodiment of the present disclosure.

Referring to FIG. 15, a vehicle 3 according to an embodiment of the present disclosure may include one or more battery packs 1 according to an embodiment of the present disclosure or battery modules 10 according to an embodiment of the present disclosure. The vehicle 3 according to the present disclosure may be, for example, an electric vehicle, a hybrid vehicle, or a plug-in hybrid vehicle. The vehicle 3 includes a four-wheel vehicle and a two-wheel vehicle. The vehicle 3 operates by power supplied from a battery pack 1 or battery module 10 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery module comprising:
a plurality of battery cells;
a module case configured to store the plurality of battery cells and having a first venting hole formed on one side thereof to discharge venting gas generated from the battery cell to an outside; and
a compression member configured to block fluid movement between at least two battery cells between the plurality of battery cells and one side of the module case.

2. The battery module according to claim 1,
wherein the compression member is configured to fill a space between the battery cells and the module case.

3. The battery module according to claim 1,
wherein the compression member is configured in a sheet shape.

4. The battery module according to claim 1,
wherein the compression member is configured to be in close contact with an upper end of the battery cell.

5. The battery module according to claim 1,
wherein the compression member is configured to be partially inserted into the first venting hole.

6. The battery module according to claim 1,
wherein the compression member has a second venting hole formed at a position corresponding to the first venting hole.

7. The battery module according to claim 6,
wherein the compression member
comprises a coupling portion protruding outward from an outer edge of the second venting hole and configured to be inserted into the first venting hole.

8. The battery module according to claim 1,
further comprising a blocking member provided between the battery cells and configured to partition the plurality of battery cells,
wherein the compression member is configured such that an end of the blocking member is in contact therewith.

9. The battery module according to claim 8,
wherein the compression member is configured such that an end of the blocking member is inserted thereinto.

10. The battery module according to claim 1,
further comprising a cover member configured to cover one side of the module case from the outside.

11. The battery module according to claim 10,
wherein the cover member has a notched portion provided at a position corresponding to the first venting hole.

12. A battery pack comprising a battery module according to any one of claims 1 to 11.

13. A vehicle comprising a battery module according to any one of claims 1 to 11.
